# EUROPEAN PATENT SPECIFICATION

(11) **EP 1 182 844 B1**
(45) Date of publication and mention of the grant of the patent: **20.09.2006**
(21) Application number: 01304277.5
(22) Date of filing: 14.05.2001
(51) Int. Cl.: H04L 29/06, H04L 29/12

(54) **Improved method of operating a mobile telecommunications network to provide route optimisation and quality of service**
Verbessertes Betriebsverfahren für ein Telekommunikationsnetz zum Versorgen von Routenoptimierung und Dienstequalität
Méthode améliorée d'opération d'un réséau de telecommunication pour fournir une optimisation des routes et de qualité de service

(30) Priority: 21.08.2000 GB 0020582
(43) Date of publication of application: 27.02.2002
(73) Proprietor: LUCENT TECHNOLOGIES INC., Murray Hill, New Jersey 07974-0636 (US)
(72) Inventor: Xiaobao , Chen X, Swindon, Wiltshire SN5 5DQ (GB)
(74) Representative: Sarup, David Alexander

(56) References cited:
- EP-A- 1 051 010
- JAIN R ET AL: "Mobile Internet access and QoS guarantees using mobile IP and RSVP with location registers" COMMUNICATIONS, 1998. ICC 98. CONFERENCE RECORD. 1998 IEEE INTERNATIONAL CONFERENCE ON ATLANTA, GA, USA 7-11 JUNE 1998, NEW YORK, NY, USA,IEEE, US, 7 June 1998 (1998-06-07), pages 1690-1695, XP010284628 ISBN: 0-7803-4788-9
- COHE D ET AL: "IP addressing and routing in a local wireless network" ONE WORLD THROUGH COMMUNICATIONS. FLORENCE, MAY 4 - 8, 1992, PROCEEDINGS OF THE CONFERENCE ON COMPUTER COMMUNICATIONS (INFOCOM), NEW YORK, IEEE, US, vol. 2 CONF. 11, 4 May 1992 (1992-05-04), pages 626-632, XP010062192 ISBN: 0-7803-0602-3
- PERKINS C E: "MOBILE IP" IEEE COMMUNICATIONS MAGAZINE, IEEE SERVICE CENTER. PISCATAWAY, N.J, US, vol. 35, no. 5, 1 May 1997 (1997-05-01), pages 84-86,91-99, XP000657114 ISSN: 0163-6804

## Description

This invention relates to an improved method of operating a mobile telecommunications network, especially a third generation network, to provide route optimization and quality of service (QoS).

In third generation telecommunications networks such as GPRS (General Packet Radio Service) and EDGE (Enhanced Data-rate for GSM Evolution), when a mobile terminal moves into a foreign network, network connectivity is optionally maintained by the use of Mobile Internet Protocol (Mobile IP). In the home network, a Home Agent (HA) is set up which maintains the location information of the mobile by use of Binding Updates, i.e., registration of information sent to the HA by the mobile node.

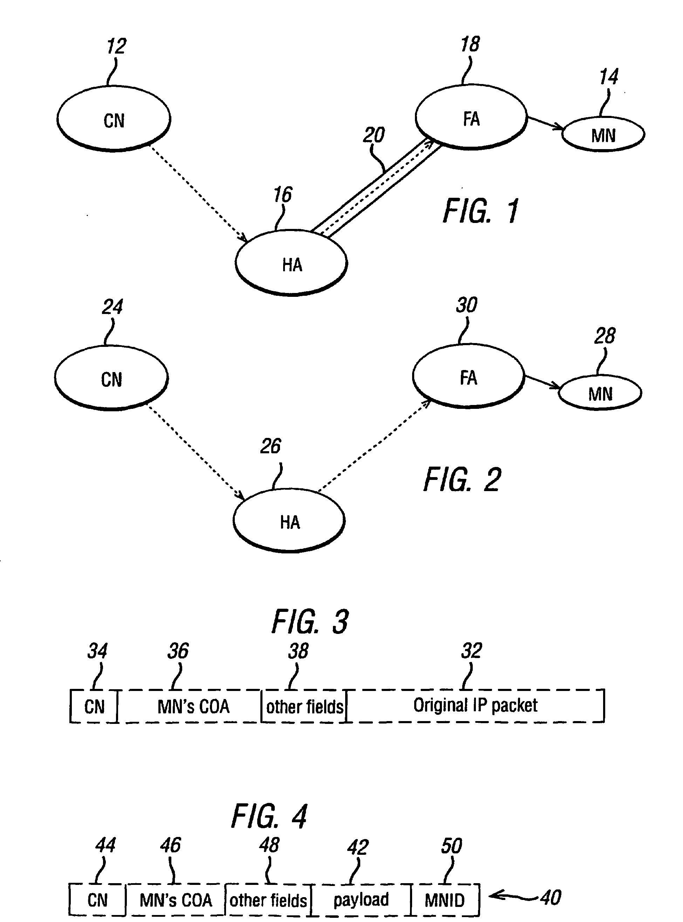

Mobile IP has two working modes. The first is illustrated in Figure 1; a mobile terminal is currently attached as a Mobile Node (MN) 14 in a network different from its home network. The MN 14 is communicating with a Correspondent Node (CN) 12. A Home Agent 16 is set up in the home network by the CN 12, and a Foreign Agent (FA) 18 is set up in the foreign network. The FA 18 allocates a unique IP address for the visiting mobile, a Care of Address (COA) and this address is sent to the HA 16 in a Binding Update.

Packets for the mobile are encapsulated by the HA 16 and tunneled along tunnel 20 to the FA 18 for transmission to MN 14. In such encapsulation, an extra IP header is added to each packet, including the COA of the MN 14. This is known as FA-COA working mode.

In the second working mode (not illustrated) there is no FA, the MN 14 is allocated a unique COA and encapsulated packets are tunneled by HA 16 directly to MN 14; this is known as Collocated Care of Address mode of working (CO-COA).

In both FA-COA and CO-COA modes of working, the encapsulation generates extra headers and possibly only small payloads can be used, which results in inefficient transmission and inefficient use of expensive system and network resources, such as radio links. Further, encapsulation hides the flow identification, and the differentiation of classes of services is thus also disabled, so that Quality of Service (QoS) provision mechanisms, such as RSVP (Resource reSerVation Protocol) Int Serve, must be chnaged.

The disadvantages of encapsulation can be avoided by the use of Non Encapsulation Mobile IP technique, as set out in the applicant's co-pending patent application number 99301437.2 "Non-encapsulation Mobile IP" filed on 26 February 1999. In this technique, the current COA of the mobile node is used as the destination address, and the original source address, i.e., the CN address, is maintained. For FA-COA working, this deletes a header of length at least 20 bytes and introduces a header of only 2 bytes; for CO-COA mode of working no header is introduced. However a disadvantage is that any firewall or egress filtering in the home network may reject such packets, because they have a source address different from the home network address.

It is an object of the invention to provide a method of packet addressing which overcomes the disadvantages set out above, and allows QoS to be provided.

In both the conventional encapsulation method and the two non-encapsulation techniques, the use of a home agent for redirecting packets to the current Care of Address together with the CN and MN forms so-called "triangle routing". This arrangement allows transparent inter-operation between the CN and the MN but forces all packets to be routed through the HA. One result of this is that packets may be routed along paths which are significantly longer than optimal, which can introduce delay into delivery, and also puts an unnecessary traffic load on the networks and routers involved. The technique of route optimisation is known in Mobile IP when encapsulation techniques are used, but with encapsulation, transmission of extra headers leads to lower transmission efficiency and failure of QoS differentiation.

It is a further object of the invention to provide an improved method of route optimization which avoids the disadvantage of re-directing via a HA.

According to the invention, a method of operating a third generation mobile telecommunications system as defined in claim 1 is provided.

In the accompanying drawings, Figure 1 illustrates the prior art. Figure 2 illustrates the problem to be solved; and Figure 3 illustrates a prior art packet format using encapsulation technique.

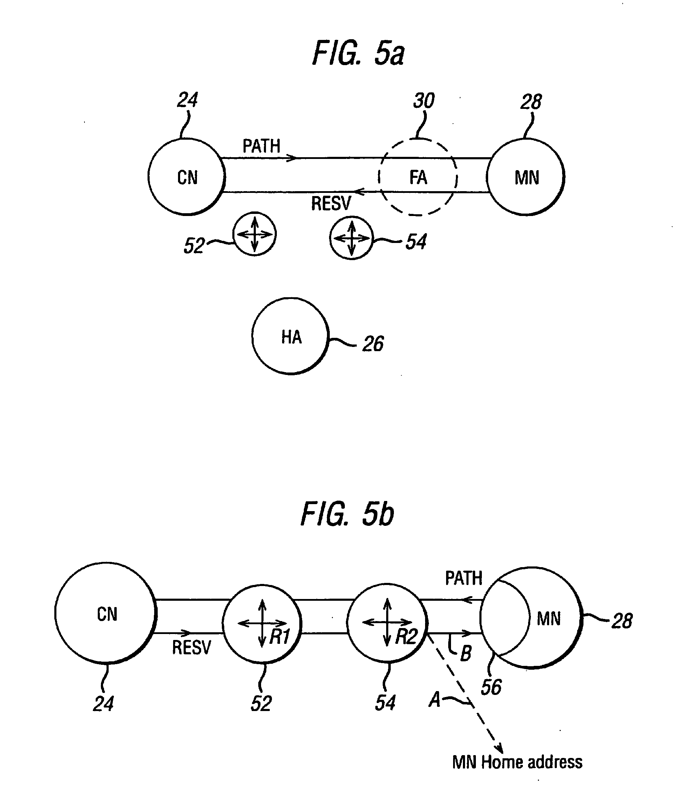

The invention will be described by way of example only with reference to Figures 4 and 5 in which:-
Figure 4 illustrates a packet header format according to the invention;
Figure 5a illustrates message exchange for a RSVP session originating from a CN; and
Figure 5b illustrates a RSVP session originated in a mobile node.

In Figure 2, a mobile which is temporarily in a foreign network is shown as MN 28, which has a FA 30. The CN 24 of the mobile has set up a HA 26.

Reference to figures 1 and 2 illustrates the problem of routing all packets via HA 16 or 26 - routes may be long and will introduce delay.

Figure 3 illustrates a packet format in which an original IP packet complete with its header is encapsulated in a packet having as the source address 34, the CN 12 (see Figure 1) and as the destination address 36 the CoA of MN 14. The packet also contains other fields 38 and the payload 32 is the complete original packet.

Figure 4 shows the packet format 40 according to the invention. The source and destination addresses 44, 46 and the other fields 48 are unchanged, but the payload 42 now contains only the payload of the original packet, which gives a saving in length, but the header is lost. The packet now also contains the new field 50, the MNID, which is an identifier code for MN 28, and is only two bytes long.

The MNID field 50 is generated by FA 30, which keeps a mapping table of MNIDs and MNs. FA 30 also sends to the HA 26 the identifier for the MN 28 with which it will need to communicate to supply the mobile; conventionally the CN 24 will solicit the HA 16 for this information.

When a packet is received by FA 30, it uses the MNID information and the mapping table it holds to find for which of the several MNs it supports the packet is destined.

The MNID 50 is also used to recover the original destination address (the home address of MN 28) by replacing the MN's CoA with the MN's home IP address. When the system is operating in FACOA mode, the home IP address is found by the FA 30 looking in its mapping table of MNIDs and MNs. The FA 30 then strips the MNID field 50 from the packet, makes a correspondent adjustment of the other IP header fields, such as recalculation of the checksum, and then delivers it to the MN.

When the system is operating in COCOA mode, the MN has already received the packet; it recalculates the checksum, and delivers the packet to the higher layers of the system.

With the use of a packet in the format shown in Figure 4, the disadvantages of routing all packets via HA 26 (Figure 2) are overcome. The packets go directly to the FA 30 (FACOA working mode) or to MN 28 (COCOA working mode). Further, all necessary information for identifying the traffic flows from the correspondent node 24 to the current COA of the mobile node 28 remains unchanged. This allows a simple adaptation of QoS session to be applied to follow the movement of the mobile as it wanders; a QoS session such as RSVP can be set up directly between CN 24 and MN 28. The class of service differentiation for QoS provision between the CN and MN will still be effective regardless of a change in the MN's network attachment point. A QoS session can have either the CN or MN as the sender. Examples will be given using RSVP (Resource reSerVation Protocol) as an example.

When the CN 24 is the sender and the MN 28 is the receiver, as shown in Figure 5a, an RSVP proxy server or its equivalent in the corespondent network initiates a PATH message, with the source and destination addresses being:-
CN: PATH msg: Scr addr: CN
   Dest addr: MN's COA

When the PATH message is received, either the proxy server or its equivalent in the foreign network in the MN 28 (for COCOA mode of working) or FA 30 (for FACOA mode of working) prepares a RESV message, as follows:-
MN: RESV msg: Src addr: MN's COA
   Dest addr: CN

Other flow identification information such as protocol ID as well as source/destination port numbers are added and the message is dispatched.

In Figure 5a the FA 30 is shown dotted as it is not active in COCOA working mode.

The RESV message is routed hop-by-hop from the foreign network to the correspondent network following the same route as the PATH message but in the reverse direction. Two network switching elements or routers, 52, 54 on the routes are shown in Figure 3a. The routers change the source and address headers appropriately for each hop. When the RSVP proxy server or its equivalent in the correspondent node receives the RESV message, a RESV confirmation message is sent out, if requested, to confirm the establishment of the whole RSVP session.

When the MN 28 is the sender and the CN 24 is the receiver of a PATH message, the format is:-
MN: PATH msg: Src addr: MN's home address
   Dest addr: CN
CN: RESV msg: Src addr: CN
   Dest addr: MN's home address

The message generation and exchanges are similar to those described when the CN is the sender. However the location of the proxy server in the foreign network can now affect the message route.

If the proxy server in the foreign network is a separate entity running on a different host machine from the mobile node 28, or even built into FA 30, it will bear an IP address which is local to the foreign network but different to the MN's home address. The previous hop (PHOP) of the first routing switch or router 54 from the foreign network to the correspondent network is recorded to be the proxy server. In these circumstances, the RESV message which originated from CN 24 is successfully routed back to the foreign network and received by the proxy server.

However, if the foreign proxy server is built into the MN 28, as shown at reference 56 in Figure 5b, then the previous hop PHOP of the first routing switch 54 will be recorded as the MN 28 at its home address. When the RESV message reaches his first hop, it will use the MN's home address as the destination address, and the RESV message will eventually be routed to the mobile node home network instead of reaching the proxy server in the foreign network.

Considering the message addressing in more detail, when MN 28 generates a PATH message, it is sent end to end to the CN, but the network sends it via the routers such as 52, 54. The first leg from proxy 56 to router 54 is addressed as:-
PATH state: previous hop: MN's home address
   next hop: R1 (52)
from router 54 to router 52:
PATH state: previous hop: R2
   next hop: CN (24)

When CN 24 returns a RESV message, the addressing is now hop-by-hop in the reverse direction to the PATH message, i.e., :-
RESV state: Src: CN
   Dest: R1
from router 52 (R1) to router 54 (R2):-
RESV state: Src R1
   Dest R2
from router R2 (54):-
RESV state: Src R2
   Dest MN's home address

This is indicated by the dotted arrow A in Figure 5b.

In these circumstances, the proxy server 56 in the foreign network is arranged to modify or regenerate a PATH message as follows:-
MN: PATH msg: Src addr: MN Care-of-Address
   Dest addr: CN
CN: RESV msg: Src addr: CN
   Dest addr: MN's Care-of-Address

The PATH and RESV messages pass between the MN 28 and CN 24 as before, but now the final hop of the RESV message is correctly directed towards the MN 28 in the foreign network, as indicated by the arrow B in Figure 5b. A RESV confirmation message can also be correctly routed.

When data packets arrive at the CN 24, the MN's COA is replaced with the MN home address, which is available from the binding cache entry for the mobile node containing the mobile node home address.

Thus a QoS session can be set up successfully, no matter what the location of the proxy server.

## Claims

1. A method of operating a third generation mobile telecommunications system in which packets are addressed to a mobile node which is currently associated with a foreign network and which is communicating with a correspondent node (24), comprising the steps of setting up a home agent (26) in the home network and allocating a Care of Address for a mobile terminal in the foreign network , **characterized by** the further steps of modifying a packet at the correspondent node in order to provide route optimization, said modification being such that the packet after modification has the correspondent node address as its source address, the Care of Address of the mobile terminal as its destination address, the payload of the packet before modification as its payload, and a mobile node identifier (50) adapted for being used by a foreign agent to find for which of several mobile nodes the packet is destined.

2. A method according to Claim 1 in which the Care of Address represents the current location of the mobile node 28.

3. A method according to Claim 1 in which the Care of Address is the address of a foreign agent (30) in the foreign network.

4. A method according to Claim 3 in which the foreign agent (30) stores a mapping table of mobile nodes and mobile node identifiers.

5. A method according to Claim 4 in which , when a packet is received by the foreign agent (30), the foreign agent looks at its stored mapping table to locate the mobile node for which the packet is destined.

6. A method according to any preceding claim comprising the further step of providing Quality of Service for the mobile in which an end-to-end Quality of Service enquiry message is sent from the correspondent node (24) to the mobile node (28) and a Quality of Service response message is returned hop-by-hop to the correspondent node (24).

7. A method according to any one of Claims 1 to 5 comprising the further step of providing Quality of Service for the mobile in which an end-to-end Quality of Service enquiry message is sent from the mobile node (28) to the correspondent node (24), the mobile node (28) having a built-in Quality of Service proxy server (56), and the proxy server (56) changing the packet header source address to the MN Care of Address.

8. A method according to claim 6 or claim 7 in which the Quality of Service is Resource reSerVation Protocol.

## Patentansprüche

1. Verfahren zum Betreiben eines Mobiltelekommunikationssystems der dritten Generation, in dem Pakete an einen Mobilknoten gerichtet werden, der momentan einem Fremdnetz zugeordnet ist und mit einem entsprechenden Knoten (24) kommuniziert, umfassend die Schritte des Einrichtens eines Heimatagenten (26) in dem Heimatnetz und Zuweisen einer Zu-Händen-Adresse (Care-of Address) an ein mobiles Endgerät in dem Fremdnetz, **gekennzeichnet durch** die weiteren Schritte des Modifizierens eines Pakets bei dem entsprechenden Knoten, um eine Leitwegoptimierung zu schaffen, wobei die Modifikation derart ist, dass das Paket nach der Modifikation die entsprechende Knotenadresse als seine Quelladresse, die Zu-Händen-Adresse des mobilen Endgeräts als seine Zieladresse, die Nutzlast des Pakets vor der Modifikation als seine Nutzlast und eine Mobilknotenkennung (50), die so beschaffen ist, dass sie von einem Fremdagenten benutzt werden kann, um herauszufinden, für welchen von mehreren Mobilknoten das Paket bestimmt ist, besitzt.

2. Verfahren nach Anspruch 1, bei dem die Zu-Händen-Adresse den momentanen Ort des Mobilknotens (28) repräsentiert.

3. Verfahren nach Anspruch 1, bei dem die Zu-Händen-Adresse die Adresse eines Fremdagenten (30) in dem Fremdnetz ist.

4. Verfahren nach Anspruch 3, bei dem der Fremdagent (30) eine Abbildungstabelle von Mobilknoten und Mobilknotenkennungen speichert.

5. Verfahren nach Anspruch 4, bei dem der Fremdagent (30) dann, wenn er ein Paket empfängt, seine gespeicherte Abbildungstabelle durchsucht, um den Mobilknoten zu lokalisieren, für den das Paket bestimmt ist.

6. Verfahren nach einem vorhergehenden Anspruch, das den weiteren Schritt des Bereitstellens einer Dienstqualität für das Mobilgerät umfasst, bei dem eine Ende-zu-Ende-Dienstqualität-Anfragenachricht von dem entsprechenden Knoten (24) zu dem Mobilknoten (28) gesendet wird und eine Dienstqualität-Antwortnachricht Sprung für Sprung zu dem entsprechenden Knoten (24) zurückgeleitet wird.

7. Verfahren nach einem der Ansprüche 1 bis 5, das den weiteren Schritt des Bereitstellens einer Dienstqualität für das Mobilgerät umfasst, bei dem eine Ende-zu-Ende-Dienstqualität-Anfragenachricht von dem Mobilknoten (28) zu dem entsprechenden Knoten (24) gesendet wird, wobei der Mobilknoten (28) einen eingebauten Dienstqualität-Proxy-Server (56) besitzt und der Proxy-Server (56) die Paketkopf-Quelladresse zu der MN-Zu-Händen-Adresse ändert.

8. Verfahren nach Anspruch 6 oder Anspruch 7, bei dem die Dienstqualität ein Resource reSerVation Protocol ist.

## Revendications

1. Procédé d'exploitation d'un système de télécommunications mobiles de troisième génération dans lequel des paquets sont adressés à un noeud mobile qui est actuellement associé à un réseau étranger et qui communique avec un noeud correspondant (24), comprenant les étapes d'établissement d'un agent de rattachement (26) dans le réseau de rattachement et d'attribution d'une Adresse de Réacheminement pour un terminal mobile dans le réseau étranger, **caractérisé par** l'étape supplémentaire de modification d'un paquet au niveau du noeud correspondant afin d'assurer une optimisation de route, ladite modification étant telle que le paquet après modification a l'adresse du noeud correspondant comme adresse source, l'Adresse de Réacheminement du terminal mobile comme adresse destinataire, la charge utile du paquet avant modification comme sa charge utile, et un identifiant de noeud mobile (50) adapté pour être utilisé par un agent étranger pour trouver celui de plusieurs noeuds mobiles auquel le paquet est destiné.

2. Procédé selon la revendication 1, dans lequel l'Adresse de Réacheminement représente la position actuelle du noeud mobile 28.

3. Procédé selon la revendication 1, dans lequel l'Adresse de Réacheminement est l'adresse d'un agent étranger (30) dans le réseau étranger.

4. Procédé selon la revendication 3, dans lequel l'agent étranger (30) mémorise une table de mises en correspondance de noeuds mobiles et d'identifiants de noeuds mobiles.

5. Procédé selon la revendication 4, dans lequel un paquet est reçu par l'agent étranger (30), l'agent étranger consulte sa table de mises en correspondance mémorisée afin de localiser le noeud mobile auquel le paquet est destiné.

6. Procédé selon l'une quelconque des revendications précédentes, comprenant l'étape supplémentaire de fourniture d'une Qualité de Service au mobile dans laquelle un message d'interrogation de Qualité de Service de bout en bout est envoyé par le noeud correspondant (24) au noeud mobile (28) et un message de réponse de Qualité de Service est renvoyé bond par bond au noeud correspondant (24).

7. Procédé selon l'une quelconque des revendications 1 à 5, comprenant l'étape supplémentaire de fourniture d'une Qualité de Service au mobile dans laquelle un message d'interrogation de Qualité de Service de bout en bout est envoyé par le noeud mobile (28) au noeud correspondant (24), le noeud mobile (28) ayant un serveur mandataire de Qualité de Service intégré (56), et le serveur mandataire (56) changeant l'adresse source de l'en-tête du paquet en l'Adresse de Réacheminement du noeud mobile.

8. Procédé selon la revendication 6 ou la revendication 7, dans lequel la Qualité de Service est un Protocole de Réservation de Ressources.
